## Europäisches Patentamt

## European Patent Office

## Office européen des brevets

(11) Veröffentlichungsnummer: **0 189 141**
A2

# EUROPÄISCHE PATENTANMELDUNG

(21) Anmeldenummer: 86100591.6

(51) Int. Cl.⁴: **B 01 F 15/00**

(22) Anmeldetag: 17.01.86

(30) Priorität: 23.01.85 DE 3502071

(43) Veröffentlichungstag der Anmeldung: 30.07.86 Patentblatt 86/31

(84) Benannte Vertragsstaaten: **AT BE CH DE FR GB IT LI LU NL SE**

(71) Anmelder: **Battenfeld Maschinenfabriken GmbH, Scherl 10 Postfach 1164/1165, D-5882 Meinerzhagen 1 (DE)**

(72) Erfinder: **Fleckner, Heinz-J., Siegener Strasse 113a, D-5960 Olpe (DE)**

(74) Vertreter: **Müller, Gerd et al, Patentanwälte F.W. Hemmerich Gerd Müller, Dipl.-Ing. D. Grosse Felix Pollmeier Hammerstrasse 2, D-5900 Siegen 1 (DE)**

(54) **Rührwerk.**

(57) Ein Rührwerk ist zur Gasbeladung und Homogenisierung von fliessfähigen PUR-Komponenten für die Herstellung eines zu Schaumstoff ausreagierenden Gemisches aus Polyol und Isocyanat ausgelegt. Es hat in einem die jeweiligen PUR-Komponente 2 enthaltenden Druckbehälter 1 einen drehantreibbaren Hohlrührer 3, dessen Rührelemente 8 hohl ausgebildet und mit Gasaustrittsöffnungen versehen sind sowie durch eine Hohlwelle 7 oder dergleichen mit einer Druckgasquelle in Verbindung stehen. Der Hohlrührer 3 hat dabei einen in seiner Drehrichtung umkehrbaren Drehantrieb 5, 6 und trägt ausserhalb des Drehkreises und/oder der Drehebene seiner Rührelemente 8 zusätzliche Rührflügel 10, die relativ zu den Rührelementen 8 um Gelenke 11 oder dergleichen ein- und ausklappbar gelagert sowie dabei in ihrem Klappwinkel begrenzt sind. Durch Antrieb der Welle 3 oder dergleichen in der einen Drehrichtung werden die Rührflügel 10 selbsttätig eingeklappt, während sie durch Antrieb der Welle 4 oder dergleichen in der anderen Richtung ebenfalls selbsttätig ausgeklappt werden.

## Rührwerk

Die Erfindung betrifft ein Rührwerk zur Gasbeladung und Homogenisierung von fließfähigen PUR-Komponenten für die Herstellung eines zu Schaumstoff ausreagierenden Gemisches aus Polyol und Isocyanat, bei welchem in einem die jeweilige PUR-Komponente, z.B. das Polyol, enthaltenden Druckbehälter ein drehantreibbarer Hohlrührer angeordnet ist, dessen Rührelemente hohl ausgebildet und mit Gasaustrittsöffnungen versehen sind, sowie durch eine Hohlwelle oder dergleichen mit einer Druckgasquelle in Verbindung stehen.

Durch EP-A 0 110 244 und DEZ "Kunststoffe", Jahrgang 74 (1984), Heft 11, S. 659 und 660, ist bereits ein Verfahren zur automatischen Gasbeladung von PUR-Komponenten bekannt, das unter Benutzung eines Rührwerks der gattungsgemäßen Art ausgeübt wird. Als Beladegas wird dabei üblicherweise Stickstoff oder getrocknete Luft verwendet.

Durch die bekannte Verfahrensart läßt sich zwar erreichen, daß nur extrem kleine Gasteilchen an den Abreißkanten in die PUR-Komponente eingewirbelt werden, obwohl ein hoher Gastransport und damit eine schnelle Gasbeladung erfolgt. Gezeigt hat sich aber auch, daß nach dieser bekannten Verfahrensart und unter Benutzung des bekannten Rührwerks eine optimale Homogenisierung der fließfähigen PUR-Komponente nicht gewährleistet werden kann.

0189141

Ziel der Erfindung ist es, mit einfachen Mitteln und geringem technischem Aufwand ein Rührwerk der eingangs angegebenen Gattung so zu verbessern, daß es nicht nur zur Gasbeladung, sondern auch zur Homogenisierung der fließfähigen PUR-Komponenten eingesetzt werden kann.

Erreicht wird das gesteckte Ziel erfindungsgemäß nach dem Kennzeichen des Anspruchs 1 dadurch,
daß der Hohlrührer einen in seiner Drehrichtung umkehrbaren Drehantrieb aufweist und außerhalb des Drehkreises seiner Rührelemente zusätzliche Rührflügel trägt,
daß die Rührflügel relativ zu den Rührelementen um Gelenke oder dergleichen ein- und ausklappbar gelagert und dabei in ihrem Klappwinkel begrenzt sind
und daß die Rührflügel durch Antrieb der Hohlwelle oder dergleichen in der einen Drehrichtung selbsttätig einklappbar sowie durch Antrieb derselben in der anderen Drehrichtung ebenfalls selbsttätig ausklappbar sind.

Der Vorteil dieser Maßnahmen liegt insbesondere darin, daß ein und dasselbe Rührwerk sich entweder zur Gasbeladung oder aber zur Homogenisierung der fließfähigen PUR-Komponenten betreiben läßt und zwar einfach dadurch, daß dessen Drehrichtung umgekehrt wird.

Durch eine geeignete Ausbildung der Rührelemente, d.h., durch entsprechende Anordnung bzw. Steuerung der Gasaustrittsöffnungen an den Rührelementen, wäre es sogar denkbar, den Vorgang der Gasbeladung gleichzeitig mit dem Vorgang der Homogenisierung ablaufen zu lassen.

Besonders bewährt hat sich eine Auslegung des Rührwerkes nach der Erfindung, bei welcher gemäß Anspruch 2 der Drehantrieb der Hohlwelle oder dergleichen bei Drehrichtungsumkehr gleichzeitig in seiner Drehzahl veränderbar ist, und zwar derart, daß die Drehzahl bei eingeklappten Rührflügeln höher liegt als bei

0189141

ausgeklappten Rührflügeln. Hierbei hat es sich nach Anspruch 3 besonders bewährt, wenn die Drehzahlenverhältnisse etwa auf 15 : 1 eingestellt sind. Wenn also für den Homogenisierungsbetrieb des Rührwerkes, beispielsweise bei Linkslauf, mit einer Drehzahl von 100 min$^{-1}$ gearbeitet wird, dann ergibt sich für den, z.B. bei Rechtslauf stattfindenden, Gasbeladungsbetrieb desselben eine Drehzahl von 1500 min$^{-1}$.

In weiterer Ausgestaltung des Lösungsprinzips der Erfindung ist es auch möglich, entweder gemäß dem Vorschlag des Anspruchs 4 die Rührflügel auf gleicher Ebene mit den Rührelementen liegend angeordnet sind. Das kann beispielsweise dadurch geschehen, daß die freien Enden der Rührelemente zugleich die Gelenke oder dergleichen für die Rührflügel tragen. Es ist aber auch möglich, die freien Enden der Rührelemente als Träger für einen konzentrisch zur Hohlwelle oder dergleichen angeordneten Ringkörper zu benutzen, an dem dann die Gelenke oder dergleichen für die Rührflügel sitzen.

Nach Anspruch 5 liegt es aber ebenfalls im Rahmen der Erfindung, wenn die Rührflügel auf einer anderen Ebene, vorzugsweise einer tieferen Ebene als die Rührelemente, z.B. unmittelbar an der Hohlwelle oder dergleichen, angeordnet sind.

Während die weiterbildende Lehre der Erfindung nach Anspruch 6 darauf hinausläuft, daß die Rührflügel in ihrem Anstell- und/ oder Neigungswinkel relativ zur Rotationsebene der Rührelemente veränderbar sind, wird nach Anspruch 7 auch die Möglichkeit eingeschlossen, daß der Ausklappwinkel der Rührflügel relativ zu den Rührelementen variierbar ist.

In manchen Fällen kann es sich auch als vorteilhaft erweisen, wenn das Rührwerk eine Ausgestaltung erhält, nach der gemäß Anspruch 8 die Druckgasquelle durch die Drehrichtungsänderung und/oder Drehzahländerung der Hohlwelle oder dergleichen entweder von den Rührelementen trennbar oder mit dieser verbindbar ist. Das kann beispielsweise durch eine einfache Schiebersteuerung bewirkt werden, die der Hohlwelle oder dergleichen zugeordnet ist. Als Antrieb für das Rührwerk ist nach Anspruch 9 ein Pneumatik- oder Hydraulikmotor vorgesehen, während gemäß Anspruch 10 aber auch ein Elektromotor mit Polumschaltung und Regelgetriebe benutzbar ist. Die der Erfindung zugrundeliegende Aufgabe kann des weiteren aber auch mit den Mitteln des Anspruchs 11, nämlich dadurch gelöst werden, daß der Hohlrührer einen in seiner Drehrichtung umkehrbaren Drehantrieb aufweist und außerhalb der Drehebene seiner Rührelemente zusätzliche Rührflügel trägt, daß die die Rührflügel tragende Welle mit der die Rührelemente tragenden Welle über eine ausrückbare Kupplung in Verbindung steht und daß die Kupplung als durch die Drehrichtungsumkehr des Drehantriebes selbsttätig ein- und ausrückbare Freilaufkupplung ausgebildet ist.

In diesem Falle hat es sich nach der Erfindung besonders bewährt, wenn gemäß Anspruch 12 der elektrische Antriebsmotor von einem Drehstrommotor gebildet ist, der zur Drehzahlregelung mit einem Frequenzumformer in Verbindung steht.

Ein weiteres Ausbildungsmerkmal für ein erfindungsgemäßes Rührwerk besteht nach Anspruch 13 darin, daß die Drehrichtung des Drehantriebes über eine ständig in einem geschlossenen Pumpkreislauf mit dem Druckbehälter liegende Dichtemeßeinrichtung steuerbar ist. Hierzu kann die Dichtemeßeinrichtung mit Maximum- und Minimumkontakten ausgestaltet sein, welche die Drehrichtungs- und die Drehzahlsteuerung für den Drehstrommotor des Drehantriebs bilden.

Schließlich erweisen sich nach der Erfindung aber auch die Maßnahmen des Anspruchs 15 als wichtig, daß die Pumpe des Pumpkreislaufes einen eigenen Antriebsmotor aufweist und für konstante Förderleistung ausgelegt ist.

Weitere Merkmale und Vorteile des Gegenstandes der Erfindung werden nachfolgend unter Bezugnahme auf eine Zeichnung erläutert. Hierbei zeigen

Fig. 1    in schematisch vereinfachter Prinzipdarstellung einen
          Vertikalschnitt durch ein in einen Druckbehälter eingebautes Rührwerk,

Fig. 2    in schematisch vereinfachter Draufsichtdarstellung das
          Rührwerk bei seinem Gasbeladungs-Betrieb,

Fig. 3    in schematisch vereinfachter Draufsichtdarstellung das
          Rührwerk während seines Homogenisierungs-Betriebs.

Fig. 4    gibt in schematisch vereinfachter Prinzipdarstellung
          einen Vertikalschnitt durch ein anderes in einen Druckbehälter eingebautes Rührwerk wieder, während

Fig. 5    in größerem Maßstab lediglich das Rührwerk ohne Druckbehälter zeigt.

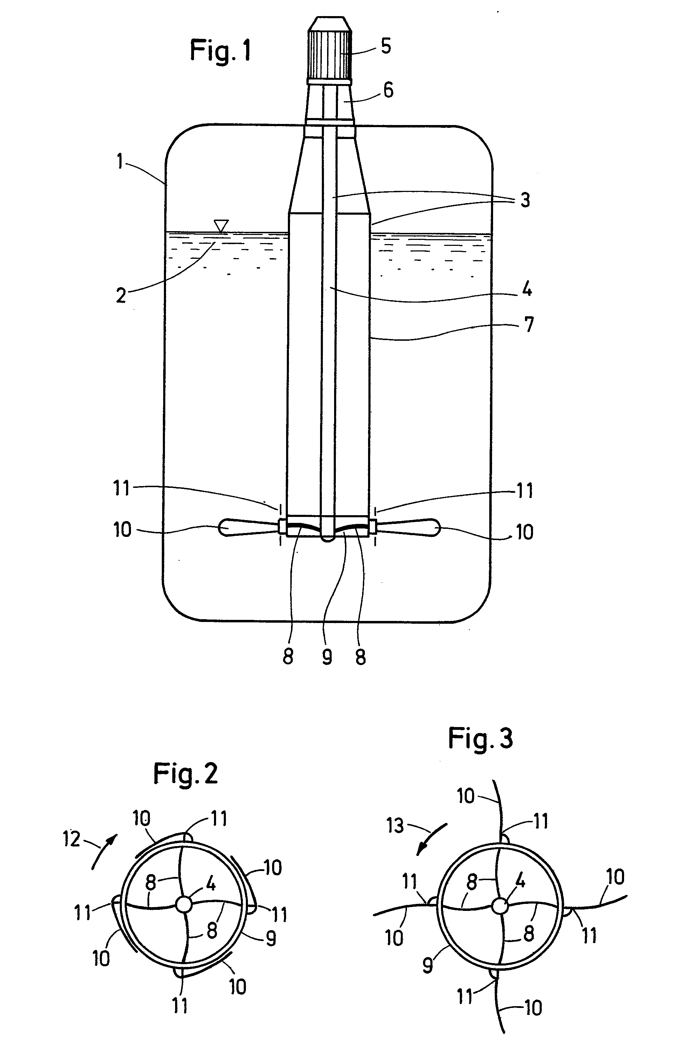

Aus Fig. 1 geht hervor, daß sich in einem Druckbehälter 1 eine
fließfähige PUR-Komponente 2, beispielsweise Polyol befindet,
auf die von oben her ein in den Druckbehälter 1 eingespeistes
Gaspolster, beispielsweise Stickstoff oder getrocknete Luft,
einwirkt.

Ebenfalls von oben her ragt in die im Druckbehälter 1 aufgenommene PUR-Komponente 2 ein sogenannter Hohlrührer 3 hinein,
dessen Welle 4 von einem außerhalb des Druckbehälters 1 angeordneten Antrieb 5, beispielsweise unter Zwischenschaltung
eines Regelgetriebes 6 in Drehung versetzt werden kann. Am
unteren Ende der Welle 4 und einem diese konzentrisch umgebenden Rohr 7 sind besondere Rührelemente 8 angeordnet, die einen
Übertritt von Beladegas, beispielsweise Stickstoff oder getrocknte Luft, in die PUR-Komponente herbeiführen, sobald sie
durch die Welle 4 in einer bestimmten Laufrichtung in Drehung
versetzt werden. Zu diesem Zweck sind die Rührelemente mit Gasaustrittsöffnungen versehen, die entweder durch das Rohr 7 oder
aber die Welle 4 mit einer Druckgasquelle, beispielsweise dem Stickstoff- oder Luftpolster im oberen Teil des Druckbehälters 1, verbindbar sind.

Von den Enden der Rührelemente 8 wird konzentrisch zur Welle 4 ein Ring 9 gehalten, an welchem wiederum Rührflügel 10 aufgehängt sind und zwar so, daß jeder derselben um eine Achse 11 zwischen der in Fig. 2 gezeigten, eingeklappten Lage und der aus Fig. 3 ersichtlichen, ausgeklappten Lage verschwenkbar ist.

In die der Fig. 2 entsprechende, eingeklappte Lage gelangen die Rührflügel 10 dann, wenn die Welle 4 durch den Antrieb 5 in Pfeilrichtung 12, also mit Rechtslauf, gedreht wird. Andererseits schwenken die Rührflügel 10 in die Stellung nach Fig. 3 aus, sobald die Welle 4 in Richtung des Pfeiles 13, also mit Linkslauf, bewegt wird.

Die in Fig. 2 dargestellte Betriebsart des Rührwerkes, also der Rechtslauf desselben, ist der Gasbeladung der PUR-Komponente 2 im Druckbehälter 1 dienlich. Sie findet bei ständig gleichbleibender, relativ hoher Drehzahl der Welle 4, z.B. mit $500$ min$^{-1}$ durch die Rührelemente 8 statt.

Die aus Fig. 3 ersichtliche Betriebsart des Rührwerkes, also bei Linkslauf der Welle 4 mit ausgeklappten Rührflügeln 10 dient hingegen der Homogenisierung der PUR-Komponente 2 innerhalb des Druckbehälters 1, wobei die Welle 4 mit einer Drehzahl von $100$ min$^{-1}$ läuft.

Beim Ausführungsbeispiel nach Fig. 1 sind die Rührflügel 10 etwa auf gleicher Ebene mit den Rührelementen 8 liegend angeordnet. Diese Anordnung ist dadurch möglich, daß die Rührflügel 10 durch ihre Gelenke 11 entweder unmittelbar an den freien Enden der Rührelemente 8 aufgehängt werden oder aber an dem von diesem getragenen Ring 9 sitzen.

Es besteht in Abwandlung des Ausführungsbeispieles nach Fig. 1 aber auch die Möglichkeit, die Rührflügel 10 mit ihren Gelenken 11 auf einer anderen Ebene, vorzugsweise einer tieferen Ebene, als die Rührelemente 8 anzzuordnen und sie in diesem Falle unmittelbar an der Welle 4 oder dem Rohr 7 über die Gelenke 11 aufzuhängen.

Die Wirkungsweise der Rührflügel 10 läßt sich im Bedarfsfalle dadurch beeinflussen, daß ihr Anstell- und/oder Neigungswinkel relativ zur Rotationsebene der Rührelemente 8 verändert wird. Eine entsprechende Beeinflussung der Wirkungsweise der Rührflügel 10 ist aber auch dadurch möglich, daß ihr Ausklappwinkel um die Gelenke 11 variiert wird.

Bewährt hat es sich, als Antrieb für das Rührwerk einen Elektromotor mit Polumschaltung für den Richtungswechsel zu benutzen und diesen über ein Regelgetriebe 6 mit der Welle 4 zu kuppeln, durch welches bei Drehrichtungsumkehr des Elektromotors 5 völlig selbstätig eine Umschaltung der Drehzahl für die Welle 4 zwischen $100 \text{ min}^{-1}$ und $1500 \text{ min}^{-1}$ stattfindet.

Denkbar wäre es auch, unmittelbar durch die Drehrichtungsumkehr des Elektromotors 5 und/oder die Drehzahländerung über das Regelgetriebe 6 auf die Verbindung zwischen der Druckgasquelle und den Rührelementen 8 zu steuern. Bei Rechtslauf und hoher Drehzahl der Welle 4 würde dann die Verbindung zwischen der Druckgasquelle und den Rührelementen 8 freigegeben, während bei Linkslauf und kleiner Drehzahl der Welle 4 die Verbindung zwischen der Druckgasquelle und den Rührelementen abgesperrt wird.

An Stelle des Elektromotors 5 mit Regelgetriebe 6 könnte als Antrieb für das Rührwerk auch ein Pneumatikmotor oder Hydraulikmotor zum Einsatz gelangen, der so aufgebaut ist, daß er nicht nur in seiner Drehrichtung umgekehrt werden kann, sondern auch in den beiden möglichen Drehrichtungen mit erheblich unterschiedlichen Drehzahlen läuft.

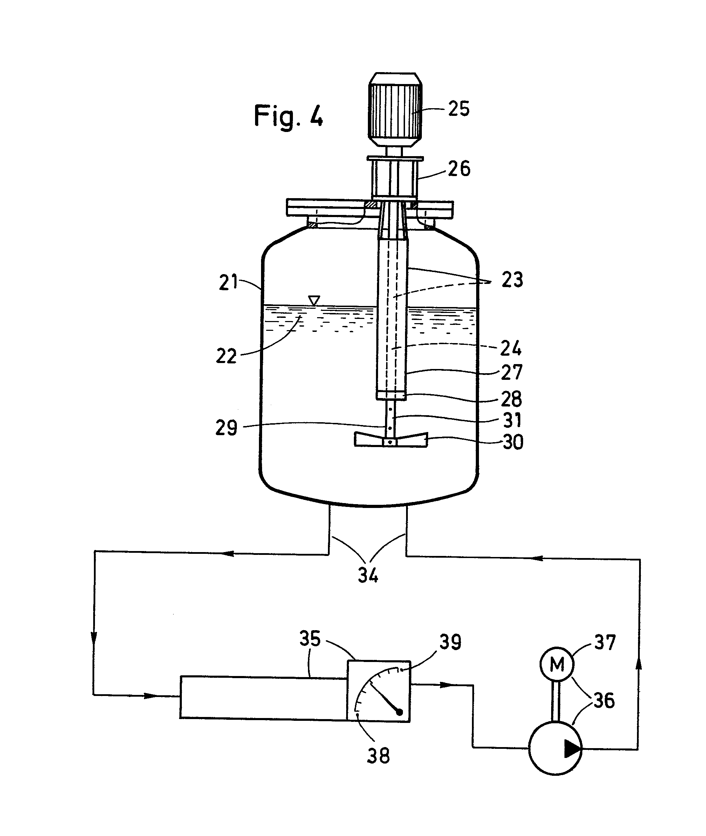

Nach Figur 4 befindet sich in einem Druckbehälter 21 eine fließfähige PUR-Komponente 22, bspw. Polyol, auf welche von oben her ein in den Druckbehälter 21 eingespeistes Gaspolster, z. B. Stickstoff oder getrocknete Luft, einwirkt.

Auch hier ragt von oben her in die Druckbehälter 21 aufgenommene PUR-Komponente 22 ein sogenannter Hohlrührer 23 hinein, dessen Welle 24 von einem außerhalb des Druckbehälters 21 angeordneten Antrieb 25, vorzugsweise unter Zwischenschaltung eines Regelgetriebes 26 in Drehung versetzt werden kann.

Unten trägt die Welle 24, und zwar unterhalb eines sie konzentrisch umgebenden Rohres 27, besondere Rührelemente 28, die den Übertritt von Beladegas, bspw. Stickstoff oder getrockneter Luft, in die PUR-Komponente bewirken, sobald sie durch die Welle 24 in einer bestimmten Laufrichtung in Drehung versetzt werden. Zu diesem Zweck sind die Rührelemente 28 als Ansaugrad ausgebildet, welche aus dem Rohr 27 das Beladegas ansaugt und in die PUR-Komponente 22 eindringt.

Nach unten schließt sich an die Welle 24 eine weitere Welle 29 über eine Freilaufkupplung 31 an, wobei auf der Welle 29 Rührflügel 30 sitzen.

Die Freilaufkupplung 31 ist so ausgelegt, daß sie bei einer bestimmten Drehrichtung der Welle 24 selbsttätig ausrückt, während sie bei der entgegengesetzten Drehrichtung derselben, ebenfalls selbsttätig, eingerückt wird.

Bei ausgerückter Freilaufkupplung 31 wird dabei die Welle 24 mit einer relativ hohen Drehzahl von bspw. 950 $min^{-1}$ durch den Drehstrommotor 25 angetrieben, während sie bei der entgegengesetzen Drehrichtung vom Drehstrommotor 25 nur eine Drehzahl von etwa 90 $min^{-1}$ erhält.

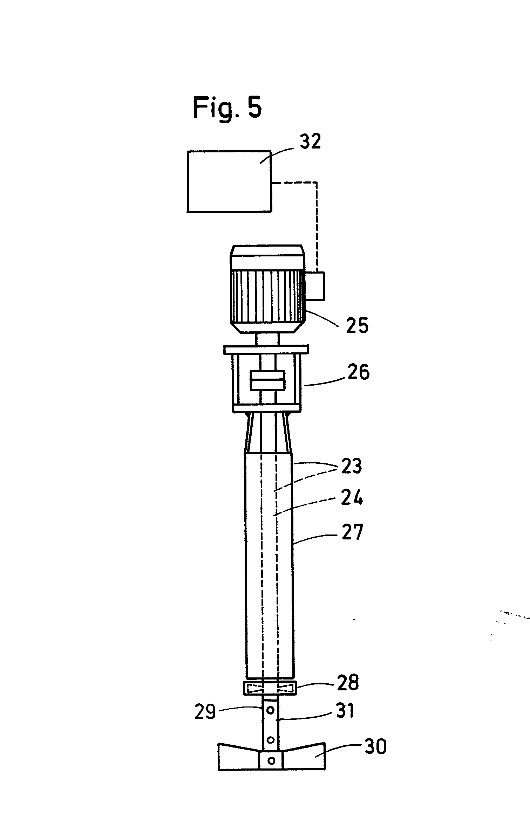

Aus Figur 5 ist ersichtlich, daß der Drehstrommotor 25 zum Zwecke seiner Drehzahlregelung mit einem Frequenzumformer 32 zusammen arbeiten kann.

Die Drehrichtung des Drehantriebes 25, 26 läßt sich durch eine ständig in einem geschlossenen Pumpkreislauf 34 mit dem Druckbehälter 21 liegende Dichtemeßeinrichtung 35 steuern. Dabei ist die Dichtemeßeinrichtung 35 in den Pumpkreislauf 34 an der Saugseite einer Pumpe 36 eingebaut, die einen eigenen Antriebsmotor 37 aufweist, welcher für konstante Förderleistung ausgelegt ist. Die Dichtemeßeinrichtung 35 wirkt auf einen Minimumkontakt 38 und einen Maximumkontakt 39 ein, wobei diese Kontakte in Steuerstromkreisen für den Drehstrommotor 25 liegen, welche die Drehrichtung und die Drehzahl desselben beeinflussen.

Die Pumpe 36 saugt ständig eine konstante Menge Polyol aus dem Druckbehälter 21 durch die Dichtemeßeinrichtung 35 an und fördert diese druckseitig wieder in den Druckbehälter 21 zurück.

Die Dichtemeßeinrichtung 35 wird dabei in Abhängigkeit von dem jeweils in dem beförderten Polyol befindlichen Gasgehalt beeinflußt. Dabei bleibt der Minimumkontakt 38 solange geschlossen, wie die vorgegebene Gasbeladung des Polyols noch nicht erreicht ist. Über die Welle 24 werden dabei die Rührelemente 28 mit hoher Drehzahl in der einen Drehrichtung bewegt, so daß das Beladegas in das Polyol eingerührt wird. Ist der erwünschte Beladezustand des Polyols erreicht, spricht der Maximumkontakt 39 an. Hierdurch wird nicht nur die Drehrichtung der Welle 24 umgekehrt, sondern zugleich auch deren Umdrehungszahl beträchtlich vermindert. Durch die Drehrichtungsumkehr der Welle 24 rückt dann die Freilaufkupplung 31 selbsttätig ein und kuppelt dadurch die Welle 29 drehfest mit der Welle 24. Nunmehr laufen bei der umgekehrten Drehrichtung und der verminderten Drehzahl auch die Rührflügel 30 um und halten das mit dem Beladegas versetzte Polyol im Druckbehälter 21 in ständiger Bewegung.

Patentansprüche

1. Rührwerk zur Gasbeladung und Homogenisierung von fließfähigen PUR-Komponenten für die Herstellung eines zu Schaumstoff ausreagierenden Gemisches aus Polyol und Isocyanat, bei welchem in einem die jeweilige PUR-Komponente, z. B. das Polyol, enthaltenden Druckbehälter ein drehantreibbarer Hohlrührer angeordnet ist, dessen Rührelemente hohl ausgebildet und/oder mit Gasaustrittsöffnungen versehen sind sowie durch eine Hohlwelle oder dergleichen mit einer Druckgasquelle in Verbindung stehen, d a d u r c h   g e k e n n z e i c h n e t , daß der Hohlrührer (3) einen in seiner Drehrichtung umkehrbaren Drehantrieb (5, 6) aufweist und außerhalb des Drehkreises und/oder der Drehebene seiner Rührelemente (8) zusätzliche Rührflügel (10) trägt, daß die Rührflügel (10) relativ zu den Rührelementen (8) um Gelenke (11) oder dergleichen zwischen einer Ruhestellung und einer Wirkstellung ein- und ausklappbar gelagert und dabei für die Wirkstellung in ihrem Klappwinkel begrenzt sind, und daß die Rührflügel (10) durch Antrieb der Hohlwelle (4, 7) oder dergl. in der einen Drehrichtung (12; Fig. 2) selbsttätig in die Ruhestellung einklappbar sowie durch Antrieb derselben in der anderen Drehrichtung (13; Fig. 3) ebenfalls selbsttätig in die Wirkstellung ausklappbar sind.

2. Rührwerk nach Anspruch 1, d a d u r c h   g e k e n n z e i c h n e t , daß der Drehantrieb (5, 6) der Hohlwelle (4, 7) oder dergl. bei Drehrichtungsumkehr gleichzeitig in seiner Drehzahl veränderbar ist und daß dabei die Drehzahl mit eingeklappten Rührflügeln (10; Fig. 2) höher liegt als die Drehzahl mit ausgeklappten Rührflügeln (10; Fig. 3).

3. Rührwerk nach einem der Ansprüche 1 und 2,
   d a d u r c h   g e k e n n z e i c h n e t ,
   daß die Drehzahlverhältnisse etwa auf 15 : 1 eingestellt
   sind.

4. Rührwerk nach einem der Ansprüche 1 bis 3,
   d a d u r c h   g e k e n n z e i c h n e t ,
   daß die Rührflügel (10) etwa auf gleicher Ebene mit den
   Rührelementen (8) liegend angeordnet sind (Fig. 1).

5. Rührwerk nach einem der Ansprüche 1 bis 3,
   d a d u r c h   g e k e n n z e i c h n e t ,
   daß die Rührflügel (10) auf einer anderen Ebene, vorzugsweise einer tieferen Ebene als die Rührelemente (8)
   relativ zur Hohlwelle (3,7) oder dergleichen angeordnet
   sind.

6. Rührwerk nach einem der Ansprüche 1 bis 5,
   d a d u r c h   g e k e n n z e i c h n e t ,
   daß die Rührflügel (10) in ihrem Anstell- und/oder Neigungswinkel relativ zur Rotationsebene der Rührelemente (8)
   veränderbar sind.

7. Rührwerk nach einem der Ansprüche 1 bis 6,
   d a d u r c h   g e k e n n z e i c h n e t ,
   daß der Ausklappwinkel der Rührflügel (10) relativ zu
   den Rührelementen (8) variierbar ist.

8. Rührwerk nach einem der Ansprüche 1 bis 7,
   d a d u r c h   g e k e n n z e i c h n e t ,
   daß die Druckgasquelle durch die Drehrichtungs- und/oder
   Drehzahländerung der Hohlwelle (4,7) oder dergleichen
   entweder von den Rührelementen (8) trennbar oder mit diesen
   verbindbar ist.

9. Rührwerk nach einem der Ansprüche 1 bis 8,
d a d u r c h   g e k e n n z e i c h n e t,
daß der Antrieb ein Pneumatik- oder Hydraulikantrieb ist.

10. Rührwerk nach einem der Ansprüche 1 bis 8,
d a d u r c h   g e k e n n z e i c h n e t ,
daß der Antrieb ein Elektromotor 5 mit Polumschaltung und
Regelgetriebe (6) ist (Fig. 1).

11. Rührwerk für Gasbeladung und Homogenisierung von fließfähigen PUR-Komponenten für die Herstellung eines zu
Schaumstoff ausreagierenden Gemisches aus Polyol und
Isocyanat, bei welchem in einem die jeweilige PUR-Komponente, z. B. das Polyol, enthaltenden Druckbehälter ein
drehantreibbarer Hohlrührer angeordnet ist, dessen Rührelemente hohl ausgebildet und/oder mit Gasaustrittsöffnungen versehen sind sowie durch eine Hohlwelle oder dergleichen mit einer Druckgasquelle in Verbindung stehen,
d a d u r c h   g e k e n n z e i c h n e t ,
daß der Hohlrührer (23) einen in seiner Drehrichtung umkehrbaren Drehantrieb (25, 26) aufweist und außerhalb
der Drehebene seiner Rührelemente (28) zusätzliche Rührflügel (30) trägt,
daß die die Rührflügel (30) tragende Welle (29) mit der
die Rührelemente (28) tragenden Welle (24) über eine ausrückbare Kupplung (31) in Verbindung steht,
und daß die Kupplung (31) als durch die Drehrichtungsumkehr des Drehantriebs (25, 26) selbsttätig ein- und ausrückbare Freilaufkupplung ausgebildet ist.

12. Rührwerk nach Anspruch 11,
d a d u r c h   g e k e n n z e i c h n e t ,
daß der Antriebsmotor (25) ein Drehstrommotor ist, der
zur Drehzahländerung mit einem Frequenzumformer in Verbindung steht.

13. Rührwerk nach einem der Ansprüche 1 bis 12,
d a d u r c h   g e k e n n z e i c h n e t ,
daß die Drehrichtung des Drehantriebes (5, 6) bzw.
(25, 26) über eine ständig in einem geschlossenen Pumpkreislauf (34) mit dem Druckbehälter (21) liegenden
Dichtemeßeinrichtung (35) steuerbar ist.

14. Rührwerk nach Anspruch 13,
d a d u r c h   g e k e n n z e i c h n e t ,
daß die Dichtemeßeinrichtung (35) mit Maximum- und
Minimumkontakten ausgestattet ist, welche die Drehrichtung-
und die Drehzahlsteuerung für den Drehstrommotor (25) des
Drehantriebes (25, 26) bilden.

15. Rührwerk nach einem der Ansprüche 13 und 14,
d a d u r c h   g e k e n n z e i c h n e t ,
daß die Pumpe (36) des Pumpkreislaufes (34) einen eigenen
Antriebsmotor aufweist und für konstante Förderleistung
ausgelegt ist.

1/3    0189141

**Fig. 1**

**Fig. 2**

**Fig. 3**

Fig. 4

## Fig. 5